**Europäisches Patentamt**

**European Patent Office**

**Office européen des brevets**

(19)

(11) Veröffentlichungsnummer: **0 013 549**
**B1**

(12)

# EUROPÄISCHE PATENTSCHRIFT

(45) Veröffentlichungstag der Patentschrift:
25.05.83

(21) Anmeldenummer: **79890071.8**

(22) Anmeldetag: **20.12.79**

(51) Int. Cl.³: **B 01 D 33/04**, C 02 F 11/00,
B 30 B 9/24, D 21 F 3/08

(54) **Stoffentwässerungsvorrichtung.**

(30) Priorität: **08.01.79 AT 127/79**

(43) Veröffentlichungstag der Anmeldung:
**23.07.80 Patentblatt 80/15**

(45) Bekanntmachung des Hinweises auf die Patenterteilung:
**25.05.83 Patentblatt 83/21**

(84) Benannte Vertragsstaaten:
**BE CH DE FR GB IT NL SE**

(56) Entgegenhaltungen:
**DE-A-2 ??? 029**
**DE-C-306 190**
**FR-A-1 540 383**
**FR-A-2 162 134**
**GB-A-1 347 289**
**US-A-2 998 883**

(73) Patentinhaber: **VOEST-ALPINE Aktiengesellschaft,
Friedrichstrasse 4, A-1011 Wien (AT)**

(72) Erfinder: **Ruppnig, Herbert, Hauptplatz 3, A-8940 Liezen
(AT)**

(74) Vertreter: **Kretschmer, Adolf, Dipl.-Ing.,
Schottengasse 3a, A-1014 Wien (AT)**

### Schlammentwässerungsvorrichtung

Die Erfindung bezieht sich auf eine Schlammentwässerungsvorrichtung mit einer Entwässerungstrommel, bei welcher das zu entwässernde Material zwischen zwei Siebbändern über wenigstens eine Entwässerungstrommel geführt wird, wobei die Siebbänder die Entwässerungstrommel über mehr als die Hälfte ihres Umfanges ausgehend vom oberen Scheitel derselben bis über den unteren Teil ihres Umfanges umschlingen, und wobei innerhalb des umschlungenen Teiles der Entwässerungstrommel Wasser ausgepreßt wird. Eine derartige Einrichtung ist beispielsweise der DE-A-2 330 029 zu entnehmen. Bei dieser bekannten Einrichtung ist der Trommelmantel von parallel zur Trommelachse liegenden Rohren bzw. aus Lochblech gebildet. Es sind auch von Siebtrommeln gebildete Entwässerungstrommeln bekannt, über welche der zu entwässernde Stoff zwischen Siebbändern geführt wird. Das Wasser wird zwischen den Siebbändern aus dem zu entwässernden Material ausgepreßt und fließt durch die Durchbrechungen der Siebtrommeln in das Innere derselben. Bei der aus der DE-A-2 330 029 bekannten Einrichtung ist ein Trog zum Auffangen des ausgepreßten Wassers unterhalb der Trommel angeordnet, so daß sich im Inneren der Trommel ein Sumpf bildet, und das ausgepreßte Wasser neuerlich durch beide Siebbänder hindurchtreten muß, um in den Trog abfließen zu können. Es ist auch bekannt, einen Trog im Inneren der Siebtrommel anzuordnen, welcher das ausgepreßte Wasser abfängt. Ein solcher Trog nimmt aber das Wasser nur unvollständig auf, so daß sich im Inneren der Siebtrommel ein Sumpf bildet. Die Siebbänder umschlingen meist die Siebtrommel auch über ihren unteren Teil und in diesen unteren Teil fließt nun wieder das Wasser aus dem Trommelinneren in den bereits weitgehend entwässerten Stoff und beeinträchtigt dadurch den Entwässerungseffekt. Überdies tritt noch der Nachteil auf, daß das Innere der Trommel stark durch den Schlamm verunreinigt wird.

Aus der GB-A-1 347 289 ist eine Entwässerungsvorrichtung für die Papierherstellung bekanntgeworden, bei welcher Walzen mit wasserundurchlässigem Mantel eingesetzt werden. Trommeln mit wasserundurchlässigem Mantel sind auch der FR-A-1 540 383 zu entnehmen, bei welcher zur Verbesserung des Auspreßeffekts Druckwalzen vorgesehen sind. Der Mantel dieser Entwässerungstrommel weist axial gerichtete Rillen auf und es ist eine seitliche Absaugeinrichtung zum Absaugen der in diese Rille gelangenden Flüssigkeit vorgesehen. Bei dieser bekannten Einrichtung läuft das zu entwässernde Gut zwischen Siebbändern im oberen Bereich auf die Trommel auf, wobei die Siebbänder die Trommel teilweise umschlingen. Die Entwässerung erfolgt prinzipiell über einen Teilbereich ausgehend vom oberen Scheitel bis etwa 90° gegenüber diesem oberen Scheitel in Sieblaufrichtung versetzt, wobei nach Überschreiten des Bereiches der Entwässerungstrommel mit im wesentlichen vertikaler Tangentialebene die in den Rillen enthaltene Flüssigkeit wiederum durch die Siebbänder in den entwässernden Stoff zurücktreten kann. Um dieses neuerliche Eindringen der bereits ausgepreßten Flüssigkeit zu vermeiden, ist die Anwendung einer Saugeinrichtung von wesentlicher Bedeutung.

Die Erfindung zielt nun darauf ab, eine Schlammentwässerungsvorrichtung der eingangs genannten Art zu schaffen, bei welcher die Entwässerung lediglich unter Einwirkung der Schwerkraft und des Preßdruckes erfolgen kann und das ausgepreßte Wasser in einer Weise abgeführt wird, daß ein Wiedereintreten zwischen die Siebbänder mit Sicherheit vermieden wird. Zur Lösung dieser Aufgabe besteht die Erfindung im wesentlichen darin, daß die Entwässerungstrommel mit einem wasserundurchlässigen Mantel ausgebildet ist, dessen Umfang ungefähr in axialer Richtung verlaufende Rillen aufweist, welche von Stegen oder Rippen begrenzt sind, welche an dem mit dem Siebband in Berührung gelangenden Umfang der Entwässerungstrommel einen entgegen der Drehrichtung ragenden Bord aufweisen, wobei die Schlammentwässerungsvorrichtung so ausgebildet ist, daß das Wasser an den Stirnseiten der Entwässerungstrommel frei abströmen kann. Eine Ausbildung einer Trommel mit von Stegen begrenzten Rillen ist im besonderen aus der FR-A-2 162 134 bereits als bekannt zu entnehmen. Bei dieser bekannten Ausbildung handelt es sich jedoch um eine Saugtrommel, bei welcher lediglich ein Filterband um die Trommel geschlungen ist, und die Flüssigkeit durch das Filterband in das Innere der Trommel gesaugt wird. Die Filterbandtrommel taucht hierzu in das zu entwässernde Material, welches nicht auf die Filterbänder aufgegeben wird, sondern in einem Behälter enthalten ist, ein.

Dadurch, daß bei der erfindungsgemäßen Ausbildung die Rillen von Stegen oder Rippen begrenzt sind, welche an dem mit dem Siebband in Berührung gelangenden Umfang der Entwässerungstrommel einen entgegen der Drehrichtung ragenden Bord aufweisen, wird sichergestellt, daß der Preßdruck, welcher auf das zwischen den Siebbändern enthaltene zu entwässernde Material aufgebracht werden soll, groß ist, und daß das ausgepreßte Wasser über einen möglichst großen Umfangsbereich der Entwässerungstrommel in den durch die Borde ausgebildeten Kanälen sicher abfließen kann. Der Umfang der Trommel ist hierbei über einen großen Zentriwinkel für die Entwässerung wirksam, ohne daß die Gefahr eines neuerlichen Zurücktretens der ausgepreßten Flüssigkeit in die Siebbänder besteht. Durch diese Konstruktion ist es möglich, auf die Anwendung eines Saugdruckes zu verzichten und dennoch eine sichere Abführung des ausgepreßten Wassers zu gewährleisten. Zweckmäßig sind die Rillen so angeordnet, daß sie zumindest zu einem Stirnende der Entwässerungstrommel schräg zu den Erzeugenden des Trommelmantels in Drehrichtung voreilend verlaufen. Durch diese Schrägung der Rillen wird das Abfließen des sich in den Rillen sammelnden Wassers begünstigt. Gemäß der Erfindung verlaufen die Rillen zu beiden Stirnenden der Trommel schräg zu den Erzeugenden des Trommelmantels in Drehrichtung voreilend, so daß die Abflußwege zu beiden Stirnenden gleich lang sind. Es wird bereits ein Effekt in bezug auf den verbesserten Abfluß des Wassers erreicht, wenn nur die Enden dieser Rillen in der beschriebenen Weise schräg zu den Erzeugenden des Trommelmantels verlaufen. Gemäß einer bevorzugten Ausführungsform der Erfindung verlaufen aber die Rillen pfeilförmig oder bogenförmig, wobei die Pfeilspitze oder die Kulminationsstelle des Bogens entgegen der Drehrichtung der Trommel weist. Hierbei hat es sich als vorteilhaft erwiesen, wenn die Rillen im Bereich des Stirnendes oder der Stirnenden der Trommel einen Winkel von 1° bis 3°, vorzugsweise einen Winkel von etwa 2 bis 2,5°, mit den Erzeugenden des Trommelmantels einschließen.

Vorzugsweise wird die erste Entwässerungstrommel, über welche das zu entwässernde Material zwischen den Siebbändern geführt wird, in der erfindungsgemäßen Weise ausgebildet, da hier der Großteil des Wassers ausgepreßt wird.

Durch die Borde der Rillen werden verhältnismäßig große Kanalquerschnitte, durch welche das Wasser abfließen kann, geschaffen. Gemäß einer bevorzugten Ausführungsform der Erfindung weisen die Stege einen T-förmigen Querschnitt auf, wobei der Querbalken des T den mit dem Siebband in Berührung gelangenden Umfang der Entwässerungstrommel bildet. Es bilden nun die Querbalken des T die Preßflächen und der Preßdruck, der auf diese Querbalken wirkt, ist verhältnismäßig groß. Durch die Wahl des T-förmigen Querschnittes werden nun die den Preßdruck aufnehmenden Flächen mittig durch den Steg des T aufgenommen, so daß eine solche Ausbildung auch bei schwacher Bemessung der Stege verhältnismäßig großen Preßdrucken gewachsen ist. Hierbei bildet der entgegen der Drehrichtung weisende Teil des Querbalkens des T den Kanal für die Abführung des ausgepreßten Wassers, während der in Drehrichtung weisende Teil des Balkens wohl den Preßdruck aufnimmt, jedoch nicht zur Begrenzung des das Wasser abführenden Kanals dient. Gemäß der Erfindung kann nun dieser in Drehrichtung weisende Teil des Balkens des T Durchbrechungen aufweisen, so daß auch durch diese Durchbrechungen das ausgepreßte Wasser in den Kanal einfließen kann. Bei einer konstruktiv einfachen Ausführungsform der Erfindung sind die Stege von auf den Trommelmantel aufgeschweißten T-Profilen gebildet.

Das aus den Kanälen austretende Wasser fließt nun entlang der Stirnwand der Trommel ab und würde in den Bereich der Lagerungen der Achse gelangen. Gemäß der Erfindung ist daher zweckmäßig die Achse der Trommel von mit den Stirnwänden der Trommel dicht verbundenen, vorzugsweise sich trompetenförmig erweiternden Schutzrohren umgeben, welche das abströmende Wasser von den Achsen und der Lagerung derselben ablenkt.

In der Zeichnung ist die Erfindung anhand eines Ausführungsbeispieles schematisch erläutert.

Fig. 1 zeigt eine Stoffentwässerungsmaschine;

Fig. 2 zeigt eine Seitenansicht der Entwässerungstrommel in Richtung des Pfeiles II der Fig. 3;

Fig. 3 zeigt einen Schnitt nach Linie III-III der Fig. 2 in vergrößertem Maßstab;

Fig. 4 zeigt ein Detail nach Linie III-III der Fig. 2 im größeren Maßstab.

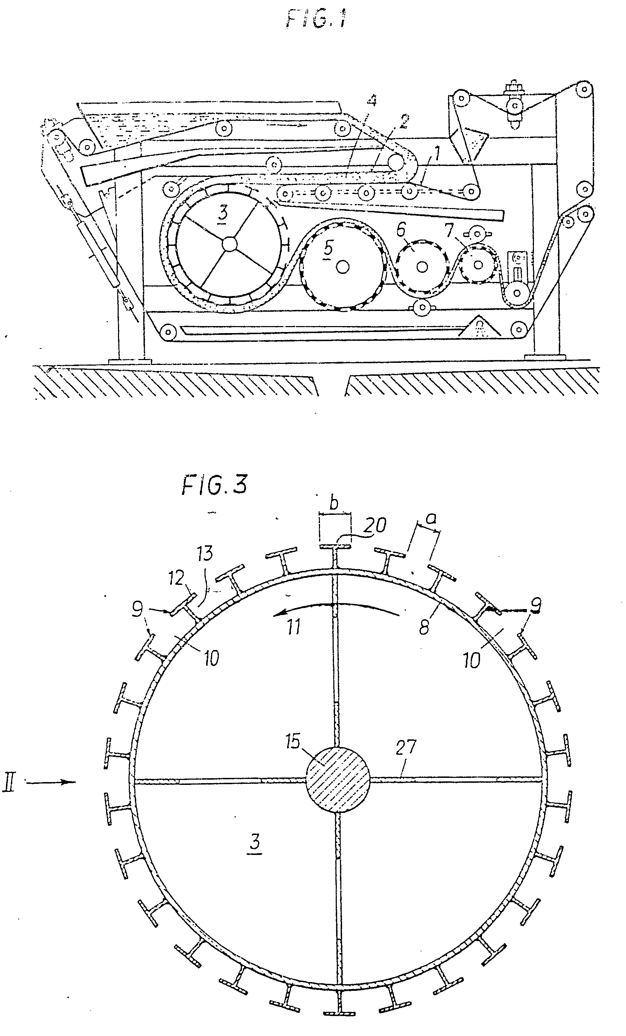

Wie Fig. 1 zeigt, werden die Siebbänder 1, 2 mit dem zu entwässernden Stoff 4 über die erste Entwässerungstrommel 3 geführt, welche in der erfindungsgemäßen Weise ausgebildet ist. Von hier aus werden die Siebbänder mit dem bereits weitgehend entwässerten Material über weitere Trommeln 5, 6 und 7 geführt, welche in üblicher Weise als Siebtrommeln ausgebildet sein können.

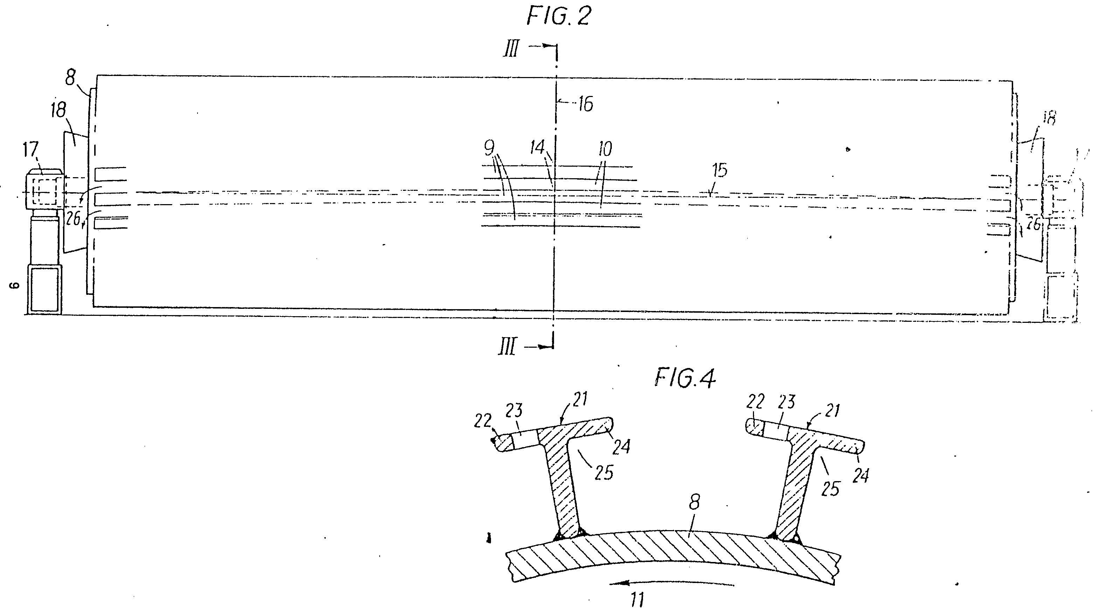

Die Entwässerungstrommel 3 ist in Fig. 2 und 3 dargestellt. Die Entwässerungstrommel 3 ist vollwandig, so daß kein Wasser eindringen kann. An den Trommelmantel 8 sind T-Profile 9 angeschweißt, welche die Stege bilden, die die Rillen 10 begrenzen. Durch die entgegen der durch den Pfeil 11 angedeuteten Drehrichtung ragenden Teile 12 der Querbalken des T werden Kanäle 13 gebildet, in welchen das Wasser zu den Stirnwänden abfließen kann.

Wie in Fig. 2 ersichtlich, verlaufen die Rillen 10 bogenförmig, wobei die Kulminationsstellen 14 des Bogens entgegen der Drehrichtung 11 weisen und in der senkrecht zur Trommelachse 15 stehenden Mittelebene 16 liegen. Das Wasser kann somit seitlich aus diesen beiden Kanälen abfließen und zum Schutz der Lager 17 der Trommelachse ist ein trompetenförmig erweitertes Schutzrohr 18 mit den Stirnenden der Trommel dicht verbunden.

Anstelle der bogenförmigen T-Profile können selbstverständlich auch pfeilförmig ausgebildete T-Profile vorgesehen sein, wobei die Voreilung der seitlichen Enden dieser Profile gegenüber dem Mittelbereich bei einer Trommel von etwa 1,4 m Breite ungefähr 5 cm beträgt.

Wie in Fig. 3 ersichtlich, sind die freien Spalten a zwischen den Borden bzw. Stegen 12 und 9 benachbarter T-Profile ungefähr gleich groß wie die Breite der Stege bzw. Borde derselben. Die lichte Breite a der freien Spalte ist jedoch höchstens gleich der Breite b der symmetrisch ausgebildeten Stege der T-Profile, vorzugsweise kleiner als dieselbe. Bei unsymmetrischer Ausbildung des T-Profiles ist die lichte Breite a höchstens gleich der Erstreckung der jeweils einander zugewendeten Borde benachbarter T-Profile in Umfangsrichtung gemessen. In allen Fällen bilden die Querbalken 20 der T-Profile 9, deren Breite in Umfangsrichtung mit b bezeichnet wurde, den mit dem Siebband in Berührung gelangenden Umfang der Entwässerungstrommel.

Anstelle der T-Profile können durchaus auch andere Profile mit ähnlichem Effekt verwendet werden. Es kommen hierfür insbesondere L-Profile, U-Profile, I-Profile, C-Profile und Z-Profile in Frage.

In Fig. 4 sind T-Profile 21 vergrößert dargestellt, welche auf den geschlossenen Mantel 8 der Entwässerungstrommel aufgeschweißt sind. Die Drehrichtung dieser Trommel ist wieder durch den Pfeil 11 angedeutet.

Die in Richtung der Drehrichtung 11 weisenden Borde 22 der T-Profile 21 weisen hier Durchbrechungen 23 auf, welche die Entwässerungswirkung weiter verbessern. Der entgegen der Drehrichtung der Trommel weisende Bord 24 ist aber in jedem Falle voll ausgebildet, um einen Kanal 25 für die Aufnahme des Wassers zu schaffen, aus welchem das Wasser zu den Stirnseiten der Trommel abfließen kann. Die Richtung des abfließenden Wassers ist in Fig. 2 durch Pfeile 26 angedeutet.

Der Mantel 8 der Trommel 3 wird durch Rippen 27 in Abstand von der Achse 15 gehalten, wie dies in Fig. 3 dargestellt ist.

Als Material für die Mantelfläche und die T-Profile kommen Stahlsorten in Betracht. Bevorzugt wird die Außenfläche der Trommel nach Sandstrahlen mit Kunststoff beschichtet.

**Patentansprüche**

1. Schlammentwässerungsvorrichtung mit einer Entwässerungstrommel, bei welcher das zu entwässernde Material zwischen zwei Siebbändern (1, 2) über wenigstens eine Entwässerungstrommel (3) geführt wird, wobei die Siebbänder (1, 2) die Entwässerungstrommel (3) über mehr als die Hälfte ihres Umfanges ausgehend vom oberen Scheitel derselben bis über den unteren Teil ihres Umfanges umschlingen, und wobei innerhalb des umschlungenen Teiles der Entwässerungstrommel (3) Wasser ausgepreßt wird, dadurch gekennzeichnet, daß die Entwässerungstrommel (3) mit einem wasserundurchlässigen Mantel (8) ausgebildet ist, dessen Umfang ungefähr in axialer Richtung verlaufende Rillen (10) aufweist, welche von Stegen (9, 21) oder Rippen begrenzt sind, welche an dem mit dem Siebband in Berührung gelangenden Umfang der Entwässerungstrommel (3) einen entgegen der Drehrichtung (11) ragenden Bord (12, 24) aufweisen, wobei die Schlammentwässerungsvorrichtung so ausgebildet ist, daß das Wasser an den Stirnseiten der Entwässerungstrommel frei abströmen kann.

2. Schlammentwässerungsvorrichtung nach Anspruch 1, dadurch gekennzeichnet, daß die Rillen (10) zumindest zu einem Stirnende der Entwässerungstrommel (3) schräg zu den Erzeugenden des Trommelmantels (8) in Drehrichtung (11) voreilend verlaufen.

3. Schlammentwässerungsvorrichtung nach Anspruch 1 oder 2, dadurch gekennzeichnet, daß die Rillen (10) zu beiden Stirnenden der Trommel (3) schräg zu den Erzeugenden des Trommelmantels (8) in Drehrichtung (11) voreilend verlaufen und vorzugsweise zu der senkrecht zur Trommelachse (15) stehenden Mittelebene (16) symmetrisch angeordnet sind.

4. Schlammentwässerungsvorrichtung nach Anspruch 1, 2 oder 3, dadurch gekennzeichnet, daß die Rillen (10) pfeilförmig oder bogenförmig verlaufen, wobei die Pfeilspitzen oder die Kulminationsstelle (14) des Bogens entgegen der Drehrichtung (11) der Trommel weisen.

5. Schlammentwässerungsvorrichtung nach einem der Ansprüche 1 bis 4, dadurch gekennzeichnet, daß die Rillen (10) im Bereich des Stirnendes oder der Stirnenden der Trommel (3) einen Winkel von 1° bis 3°, vorzugsweise einen Winkel von etwa 2° bis 2,5° mit den Erzeugenden des Trommelmantels (8) einschließen.

6. Schlammentwässerungsvorrichtung nach einem der Ansprüche 1 bis 5, dadurch gekennzeichnet, daß die Stege (9, 21) einen T-förmigen Querschnitt aufweisen, wobei der Querbalken des T den mit dem Siebband in Berührung gelangenden Umfang der Entwässerungstrommel (3) bildet.

7. Schlammentwässerungsvorrichtung nach einem der Ansprüche 1 bis 6, dadurch gekennzeichnet, daß an dem mit dem Siebband in Berührung gelangenden Umfang der Entwässerungstrommel (3) die freien Spalte (a) zwischen den Rippen oder Stegen (9) bzw. den Borden (12) derselben in Umfangsrichtung gemessen höchstens gleich, vorzugsweise kleiner, als die Breite (b) der Rippen oder Stege (9) bzw. Borde (12) sind.

8. Schlammentwässerungsvorrichtung nach Anspruch 7, dadurch gekennzeichnet, daß der in Drehrichtung (11) weisende Teil des Balkens des T Durchbrechungen (23) aufweist.

9. Schlammentwässerungsvorrichtung nach einem der Ansprüche 1 bis 8, dadurch gekennzeichnet, daß die Stege von auf den Trommelmantel (8) aufgeschweißten T-Profilen (9, 21) gebildet sind.

10. Schlammentwässerungsvorrichtung nach einem der Ansprüche 1 bis 9, dadurch gekennzeichnet, daß die Achse (15) der Trommel (3) von mit den Stirnwänden der Trommel (3) dicht verbundenen, vorzugsweise sich trompetenförmig erweiternden Schutzrohren (18) umgeben ist.

## Claims

1. Apparatus for dewatering sludge, comprising a dewatering drum, in which the material to be dewatered is passed between two sieve belts (1, 2) over at least one dewatering drum (3), the sieve belts (1, 2) contacting the dewatering drum (3) over more than half of its circumference starting from the top and extending along the lower portion of its circumference, water being pressed out in the contacted area of the dewatering drum (3), characterized in that the dewatering drum (3) is provided with a water-impermeable shell (8) having on its circumference grooves (10) extending approximately in axial direction, said grooves being delimited by straps (9, 21) or ribs having a rim (12, 24) at the circumference of the dewatering drum (3) contacting the sieve belt, said rim extending in opposite direction to the direction (11) of drum rotation, the apparatus being constructed in such a way that the water can run off freely at the front faces of the dewatering drum (3).

2. Apparatus as claimed in claim 1, characterized in that the grooves (10) to at least one front end of the dewatering drum (3) are directed obliquely to the generatrices of the drum shell (8) and leading in the direction (11) of rotation.

3. Apparatus as claimed in claim 1 or 2, characterized in that the grooves (10) to both front ends of the dewatering drum (3) are directed obliquely to the generatrices of the drum shell (8) and leading in the direction (11) of rotation and preferably are arranged symmetrically with respect to the center plane (16) extending perpendicular to the drum axis (15).

4. Apparatus as claimed in claim 1, 2 or 3, characterized in that the grooves (10) extend in a arrow-like manner or in an arcuate manner, wherein the arrow tip or the culminating point (14) of the arc, resp., points in a direction opposite to the direction of rotation of the drum.

5. Apparatus as claimed in any one of claims 1 to 4, characterized in that at the area of a front end or the front ends of the drum the grooves (10) include an angle of 1 to 3 degrees, preferably an angle of approximately 2 to 2,5 degrees, with the generatrices of the drum shell (8).

6. Apparatus as claimed in any one of claims 1 to 5, characterized in that the straps (9, 21) have a T-shaped cross-section, the cross beams of the T forming the circumference of the dewatering drum (3) which contacts the sieve belt.

7. Apparatus as claimed in any one of claims 1 to 6, characterized in that at the circumference of the dewatering drum (3) contacting the sieve belt the free gaps (a) between the ribs or straps (9) or rims (12) thereof, resp., measured in circumferential direction, are at most equal to, preferably smaller than, the width (b) of the ribs or straps (9) or rims (12), resp.

8. Apparatus ac claimed in claim 7, characterized in that the portion of the cross beam of the T pointing in the direction (11) of rotation is provided with perforations.

9. Apparatus as claimed in any one of claims 1 to 8, characterized in that the straps are formed by T-profiles (9, 21) welded to the drum shell (8).

10. Apparatus as claimed in any one of claims 1 to 9, characterized in that the axis (15) of the drum (3) is surrounded by protecting tubes (18) tightly connected with the front walls of the drum (3) and preferably tapering in a trumpet-like manner.

## Revendications

1. Installation de déshydratation de boue comportant un tambour de déshydratation et dans laquelle la matière déshydrater est guidée entre deux bandes de filtrage (1, 2) sur au moins un tambour de déshydratation (3), les bandes de filtrage (1, 2) entourant le tambour de déshydratation (3) sur plus de la moitié de sa périphérie depuis son sommet jusque sur la partie inférieure de sa périphérie et l'eau étant expulsée à l'intérieur de la partie enveloppée du tambour de déshydratation (3), caractérisée en ce que le tambour de déshydratation (3) est pourvu d'une enveloppe (8) imperméable à l'eau, dont la périphérie comporte des rainures (10) orientées approximativement en direction axiale et qui sont délimitées par des voiles (9, 21) ou des nervures, qui comportent, sur la périphérie du tambour de déshydratation (3) qui entre en contact avec la bande de filtrage, un bord (12, 24) orienté en sens opposé du sens de rotation (11), l'installation de déshydratation de boue étant agencée de manière que l'eau puisse être déchargée librement sur les côtés frontaux du tambour de déshydratation.

2. Installation de déshydratation selon la revendication 1, caractérisée en ce que les rainures (10) sont disposées, au moins vers une extrémité (frontale) du tambour de déshydratation (3), en oblique par rapport aux géneratrices de l'enveloppe de tambour (8) et en avance dans le sens de rotation (11).

3. Installation de déshydratation selon l'une des revendications 1 ou 2, caractérisée en ce que les rainures (10) sont disposées, vers les deux extrémités frontales du tambour (3), en oblique par rapport aux génératrices de l'enveloppe de tambour (8) et en avence dans le sens de rotation (11) et sont orientées de préférence symétriquement par rapport au plan médian (16) perpendiculaire à l'axe de tambour (15).

4. Installation de déshydratation selon l'une quelconque des revendications 1 à 3 caractérisée en ce que les rainures (10) ont un profil en forme de flèche ou d'arc, les pointes de flèche ou les points culminants (14) de l'arc étant orientés en sens opposé à la direction de rotation (11) du tambour.

5. Installation de déshydratation selon l'une quelconque des revendications 1 à 4, caractérisée en ce que les rainures (10) font avec les génératrices de l'enveloppe de tambour (8), dans la zone de la ou des extrémités frontales du tambour (3), un angle de 1 à 3°, de préférence un angle d'environ 2 à 2,5°.

6. Installation de déshydratation selon l'une quelconque des revendications 1 à 5, caractérisée en ce que les voiles (9, 21) ont une section droite en forme de T, la barre transversale du T constituant la périphérie du tambour de déshydratation (3) qui entre en contact avec la bande de filtrage.

7. Installation de déshydratation selon l'une quelconque des revendications 1 à 6, caractérisée en ce que, sur la périphérie du tambour de déshydratation (3) qui entre en contact avec la bande de filtrage, les intervalles libres (a) existant entre les nervures ou les voiles (9) ou bien leurs bords (12) ont une dimension, mesurée dans la direction périphérique, qui est au maximum égale, et de préférence inférieure, à la largeur (b) des nervures ou des voiles (9) ou des bords (12).

8. Installation de déshydratation selon la revendication 7, caractérisée en ce que la partie de la barre transversale du T qui est orientée dans le sens de rotation (11) comporte des évidements (23).

9. Installation de déshydratation selon l'une quelconque des revendications 1 à 8, caractérisée en ce que les voiles sont constitués par de profilés en T (9, 21) soudés sur l'enveloppe de tambour (8).

10. Installation de déshydratation selon l'une quelconque des revendications 1 à 9, caractérisée en ce que l'arbre (15) du tambour (3) est entouré par des tubes protecteurs (18) s'élargissant de préférence en forme de trompette et reliés de façon étanche aux parois frontales du tambour (3).

FIG.1

FIG.3

FIG.2

FIG.4

0 013 549